(19) Europäisches Patentamt

European Patent Office

Office européen des brevets

(11) **EP 0 869 689 A2**

(12) **EUROPEAN PATENT APPLICATION**

(43) Date of publication:
07.10.1998 Bulletin 1998/41

(51) Int. Cl.⁶: **H04Q 3/60**

(21) Application number: 98105672.4

(22) Date of filing: 27.03.1998

(84) Designated Contracting States:
**AT BE CH DE DK ES FI FR GB GR IE IT LI LU MC NL PT SE**
Designated Extension States:
**AL LT LV MK RO SI**

(30) Priority: 31.03.1997 JP 79574/97

(71) Applicant: **Hitachi, Ltd.**
**Chiyoda-ku, Tokyo 101-0062 (JP)**

(72) Inventors:
• **Kusaki, Tsutomu**
**Yokohama-shi (JP)**
• **Takeda, Yukiko**
**Tokorozawa-shi (JP)**

(74) Representative:
**Strehl Schübel-Hopf & Partner**
**Maximilianstrasse 54**
**80538 München (DE)**

(54) **Communication system for emergency calls**

(57) In a communication network system (10) having a concentrating interval (250) of the number of communication lines smaller than the number of subscriber terminals (400) at intermediate positions in communication lines which connect a plurality of subscriber lines and a Public Switched Telephone Network (PSTN) (1000), when an emergency call is generated from a certain subscriber terminal to, for example, a fire-police (500), the line which has performed the emergency call communication in a concentrating interval is held for a predetermined time after the emergency call communication was disconnected. When a re-alerting signal (701) is generated from the fire-police to the subscriber terminal within a predetermined time, a call signal (901) is transmitted to the subscriber terminal through the line held in the concentrating interval. Even when an origination signal (904) is generated from the subscriber terminal to the fire-police within a predetermined time, an origination signal (704) is transmitted to the fire-police through the line held in the concentrating interval. A management table (225) is used for holding the line in the concentrating interval.

FIG. 1

## Description

BACKGROUND OF THE INVENTION

The invention relates to a communication system, a circuit transfer adapter, and a concentrator and, more particularly, to the improvement of a circuit control which enables a re-alerting at the time of an emergency call connection in a communication network in which a concentrating interval such as a digital circuit or the like is included in a partial interval of an analog subscriber line between a local switch (or subscriber switch) and a subscriber terminal.

Generally, in a conventional analog subscriber line, when a fixed telephone (terminal) is seen from the local switch, the line and the terminal correspond to each other in a one-to-one corresponding relation. In the case where such a terminal is connected through the analog subscriber line, as well as an ordinary communication, an emergency call from the subscriber terminal to a fire-police is also connected and communicated through the local switch.

In the process in case of an emergency call, generally, because of its significance, even if a transmitter (subscriber) once finishes a communication and on-hooks, a re-alerting from the termination side to the origination side is permitted, and on the other hand, when the transmitter (subscriber) off-hooks for re-originating just after he/she on-hooked, a restart of the communication between the termination side and the origination side is permitted. Specifically speaking, the above point will be summarized as follows.

There is a case where just after the communication of the emergency call was finished by the on-hook of the subscriber terminal, a re-alerting is performed to the same subscriber terminal through the local switch from an emergency call termination destination such as fire-police, emergency hospital, or the like which has performed the communication just before the on-hook. In such a case, a call signal is transmitted from the same local switch to the same subscriber terminal and the subscriber terminal (subscriber) is again called. When the subscriber responds to such a call, a connect signal is transmitted to the local switch and the communication between the subscriber terminal and the emergency call termination destination (fire-police, or the like) is restarted (conventional art 1).

Just after the communication of the emergency call was finished by the on-hook of the subscriber terminal, when the subscriber again off-hooks and the line between the subscriber terminal and the local switch is again connected, if the line between the local switch and the emergency call termination destination is not disconnected by a line holding function, the communication between the subscriber terminal and the emergency call termination destination (fire-police, or the like) is restarted (conventional art 2).

The above-mentioned conventional art 1 and 2 are disclosed in for example JP-A-9-233188.

In recent years, a wireless local loop system (WLL system) for the purpose of reduction of a line installing time and decrease in installing costs by wireless concentrating parts of the conventional subscriber lines by using a wireless technique of a mobile communication system has been developed. As an example of the WLL system, a base station corresponding to the WLL system or a concentrator for concentrating the lines from the base station is connected to the local switch of the existing PSTN (Public Switched Telephone Network) and the subscriber terminal corresponding to the WLL system is connected to the base station through the wireless line. Consequently, the relation between the local switch and the subscriber terminal is similar to the relation between the local switch and the subscriber terminal connected by the conventional subscriber lines with respect to the ordinary communication. From the above example as well, the WLL system is a system in which parts of the lines are concentrated in a wireless state. It is desirable for preventing the subscriber from being aware of a difference from the existing system comprising only the analog subscriber lines. For this purpose, it is necessary to provide services and functions similar to those of the conventional system of only the analog subscriber lines.

When the subscriber terminal side is seen from the local switch side, even if a plurality of terminals were enclosed (connected) by the concentration, the WLL system which is connected after the subscriber lines of the local switch is seen only as if the subscriber terminals of only the number as many as the number of subscriber lines were enclosed. In such a case, when the emergency call is disconnected from the subscriber side, although the local switch holds the line used for the emergency call even after the disconnection, there is the first problem such that, as for the holding, only the line up to the portion of the existing analog circuits which are directly connected to the local switch can be held.

When the emergency call is disconnected from the subscriber side as mentioned above, the concentrated portion is not held, so that the emergency call cannot be re-connected. When describing in detail causes of such a situation, in the conventional subscriber lines in which the lines and the subscriber terminals are made correspond in a one-to-one corresponding relation, at the time of re-alerting of the emergency call, even if the line between the subscriber terminal and the local switch has been disconnected and released, by calling from the local switch to the specific line, the specific subscriber terminal can be called. In the WLL system, however, since a digital concentrating interval exists in a part of the subscriber lines, if the line (channel) is released in such an interval simultaneously with the on-hook of the subscriber, the same line (channel) is used for another call until the re-alerting. There is the second problem such that when a traffic is high, there is no free line and a situation such that even if a re-alerting (re-termination) is performed, the line cannot be assured occurs (re-alerting and re-termination become impossible).

With respect to the communication resume by the off-hook just after the on-hook of the subscriber terminal as well, similarly, there is the third problem such that if the concentrating interval is used for another call, the communication cannot be restarted.

In a communication network system, even if all of the circuits between the subscriber terminals and the local switch are constructed by analog circuits or digital circuits, so long as the concentrating interval is included in the halfway, the above first to third problems will occur.

SUMMARY OF THE INVENTION

To solve the above problems, in a system such as a WLL system or the like in which parts of subscriber lines are concentrated, it is an object of the invention to assure a line to re-connect an emergency call when an emergency call communication is finished.

Another object of the invention is to provide a communication system, a concentrator, and a circuit transfer adapter, in which a re-alerting from an emergency call termination destination such as a fire-police or the like is transmitted to a subscriber terminal in a manner similar to a conventional subscriber line, thereby realizing a restart of a communication.

Still another object of the invention is to provide a communication system, a concentrator, and a circuit transfer adapter, in which when an emergency call communication is finished, if a subscriber terminal again off-hooks, a restart of a communication with a termination destination is realized.

Further another object of the invention is to provide a communication system for efficiently using the subscriber line when the communication is restarted.

To solve the above problems, according to the invention, there is provided a communication system comprising: subscriber terminals each of which is identified by an identification number of the subscriber terminal and transmits a communication partner number at the time of call origination; a concentrator including first analog circuit ports which enclose the n (n is a natural number) subscriber terminals, first digital circuit ports for connecting m (m is a natural number: n > m) digital circuits, and first circuit assigning means for, when there is a call origination from the subscriber terminal, assigning the first digital circuit port which is not used for communication to the subscriber terminal which performed the call origination; and a circuit transfer adapter having m second digital circuit ports which construct pairs together with the first digital circuit ports provided for the concentrator, second analog circuit ports having k (k is a natural number: k ≥ n) analog circuits which construct pairs together with the first analog circuit ports, and second circuit assigning means for converting information which is inputted to the second digital circuit port into the second analog circuit port and outputting, wherein the concentrator further has first call control means for detecting the identification number of the origination subscriber terminal at the time of the call origination from a subscriber connected to one of the first analog circuit ports, forming an origination request signal including the identification number of the origination subscriber terminal, and outputting to the first digital circuit port, and the circuit transfer adapter further has: a circuit management table for, when the origination request signal is received by the second digital circuit port, storing a set of the number of the second digital circuit port which received the origination request signal, the identification number of the origination subscriber terminal included in the origination request signal, and a using state of the second digital circuit port; and holding means for holding the second digital circuit port when a using state of the second digital circuit port which is stored in the circuit management table indicates an emergency call holding period of time.

To solve the above problems, according to the communication system of the invention, when an emergency call re-alerting signal is received from the second analog circuit port while the second digital circuit of the origination subscriber is held, the origination subscriber terminal regarding the emergency call is called through the second digital circuit port held by the holding means.

To solve the above problems, according to the communication system of the invention, when the origination signal is received from the first analog circuit port regarding the emergency call while the second digital circuit is held, the emergency call is re-connected through the first digital circuit port used at the time of the call origination of the emergency call and the second digital circuit port held by the holding means.

To solve the above problems, according to the invention, there is provided a circuit transfer adapter comprising: digital circuit ports which enclose m (m is a natural number) digital circuits; analog circuit ports which enclose k (k is a natural number: k > m) analog circuits and transmit information from the digital circuit ports; a control circuit port for transmitting control information of the digital circuit port; call control means for assigning the digital circuit port which is designated by a control signal to any one of the analog circuit ports and controlling on the basis of a control signal which is received through the control circuit port; a circuit management table for storing the digital circuit ports assigned by the call control means, the analog circuit ports, and using states of the digital circuit ports; and holding means for holding the digital circuit port regarding an emergency call after the emergency call was disconnected in the case where a signal to request a call origination of the emergency call is transmitted as such a control signal, wherein while the digital circuit port regarding the emergency call is held by the holding means, a message indicating an emergency call holding is stored as a using state of the digital circuit port in the circuit management table.

To solve the above problems, according to the circuit transfer adapter of the invention, when the call control means receives a call signal from the analog circuit port while the digital circuit port is held by the holding means, the call control means retrieves the circuit management table on the basis of the analog circuit port which received the call signal and, when the using state of the digital circuit port corresponding to the analog circuit port indicates the emergency call holding, an emergency call re-alerting signal is outputted as such a control signal to the control circuit port.

To solve the above problems, according to the circuit transfer adapter of the invention, when the call control means receives an emergency call re-connect signal from the control circuit port while the digital circuit port is held by the holding means, the call control means retrieves the circuit management table on the basis of the digital circuit port regarding the emergency call re-connect signal, and in the case where the using state of the digital circuit port indicates an emergency call holding, the call control means connects the analog circuit port corresponding to the digital circuit and opens the analog circuit port.

To solve the above problems, according to the invention, there is provided a concentrator comprising: analog circuit ports which enclose n (n is a natural number) subscriber terminals; digital circuit ports for connecting m (m is a natural number: n > m) digital circuits on the network side and transmitting information from the analog circuit ports; a control circuit port for transmitting control information of the digital circuit port; and call control means for, when there is a call origination from any one of the analog circuit ports, assigning the digital circuit port which is not used for a communication to the analog circuit port which performed the call origination, wherein when the call origination is an emergency call, if a disconnection of the emergency call is detected from the analog circuit port regarding the emergency call, the call control means outputs an emergency call disconnect signal to the control circuit port.

To solve the above problems, according to the concentrator of the invention, when an emergency call re-alerting signal is received through the control circuit port, the call control means calls the subscriber terminal to be called through the second analog circuit port on the basis of the emergency call re-alerting signal.

To solve the above problems, according to the concentrator of the invention, when a connect signal is received through the analog circuit port regarding the emergency call, the call control means transmits an emergency call re-connect signal through the control circuit port and re-connects the emergency call through the digital circuit port used at the time of the communication of the emergency call.

To solve the above problems, according to a communication system of the invention, there is provided a communication network system including, for example, a local switch, an adapter apparatus which is connected by circuits of the number as many as the number of subscribers which are accommodated under the domination of the local switch, a concentrator which is connected through a concentrating interval under the domination of the adapter apparatus, and subscriber terminals each thereof being connected with each circuit under the domination of the concentrator, wherein the adapter apparatus comprises: means which has a timer that is activated only for a predetermined time when an emergency call disconnect signal (signal to notify that the circuit between the subscriber terminal and the node was disconnected by the subscriber from a state of the emergency call communication in progress) which is transmitted from the concentrator is received and which is used for holding the circuit used for the emergency call communication so far between such means and the dominant concentrator during the activation of the timer and restricting the use of another call; means for, when a call signal (re-alerting signal) is received from the local switch during the activation of the timer, transmitting an emergency call re-alerting signal (signal to notify the dominant node of a fact that a re-alerting request was received from the local switch) to the dominant concentrator; and means for receiving an emergency call re-connect signal [signal to notify that the circuit between the subscriber terminal and the dominant node was shifted from an idle state to a connecting state (communicable state)] during the activation of the timer, stopping the timer, and transmitting a connect signal or an origination signal to the local switch.

According to the communication network system having the means as mentioned above, in the case where the conventional local switch and the subscriber terminal are directly connected by a re-alerting from the emergency call connection destination or an off-hook of the subscriber terminal just after the end of the emergency call communication, in a manner similar to that the communication can be restarted among the call connection destination, the local switch, and the subscriber terminal, a speech path is reset among the emergency call connection destination, the local switch, the adapter apparatus, the concentrator, and the subscriber terminal, and the communication can be restarted.

According to the embodiment of the invention, in the communication network system represented by a WLL system such that a digital concentration or a wireless concentration has been performed to parts of the analog subscriber lines in which the circuits between the local switch and the subscriber terminals and the subscriber terminals are made correspond to each other in a one-to-one corresponding relation, even in the case where the concentrating interval exists in a part of the subscriber lines, a re-alerting from the emergency call termination destination (fire-police or the like) or a re-connect corresponding to the re-alerting just after the end of the emergency call provided in the conventional analog subscriber line between the local switch and the subscriber terminal can be performed by specifying the subscriber and can be certainly executed.

Even in the off-hook of the subscriber terminal just after the end of the emergency call, by realizing the resume of the communication with the emergency call termination destination, services and functions similar to those of the conventional emergency call process can be provided. It is also possible to construct such that the subscriber terminal and the subscriber are not aware of the concentration of the subscriber lines.

Further, since a dedicated line for an emergency call is not provided, a pressure to the ordinary call traffic can be avoided.

BRIEF DESCRIPTION OF THE DRAWINGS

Fig. 1 is a diagram showing an outline of a communication network system to which the invention is applied;

Fig. 2 is a diagram showing an internal construction of a node 2 (digital - analog circuit transfer adapter) in Fig. 1;

Fig. 3 is a diagram showing an outline of an internal construction of a node 3 (concentrator) in Fig. 1;

Fig. 4 is a diagram showing a flowchart showing an emergency call re-alerting processing procedure in the node 2;

Fig. 5 is a diagram showing a circuit reconnecting procedure sequence at the time of an emergency call re-alerting from a fire-police after the end of an emergency call;

Fig. 6 is a diagram showing a communication restarting procedure sequence by an off-hook of a subscriber terminal just after the end of the emergency call;

Fig. 7 is a diagram showing a disconnect release procedure sequence of a holding line after the end of the emergency call;

Fig. 8 is a diagram showing a signal internal construction of an emergency call disconnect signal;

Fig. 9 is a diagram showing a signal internal construction of an emergency call re-alerting signal;

Fig. 10 is a diagram showing a signal internal construction of an emergency call re-connect signal;

Fig. 11 is a diagram showing a specific construction of a communication network system to which the invention is applied;

Fig. 12 is a diagram showing a construction of a channel management table 225 in a memory 220 in the node 2;

Fig. 13 is a diagram showing a channel management table processing flowchart when an emergency call disconnect signal is received;

Fig. 14 is a diagram showing a channel management table processing flowchart when a call signal is received;

Fig. 15 is a diagram showing a channel management table processing flowchart when an emergency call re-connect signal is received;

Fig. 16 is a diagram showing an example of a bit coding of an emergency call disconnect signal information element;

Fig. 17 is a diagram showing an example of a bit coding of a re-alerting signal information element; and

Fig. 18 is a diagram showing an example of a bit coding of an emergency call re-connect signal information element.

DESCRIPTION OF THE PREFERRED EMBODIMENT

An embodiment of the invention will now be described hereinbelow with reference to the drawings.

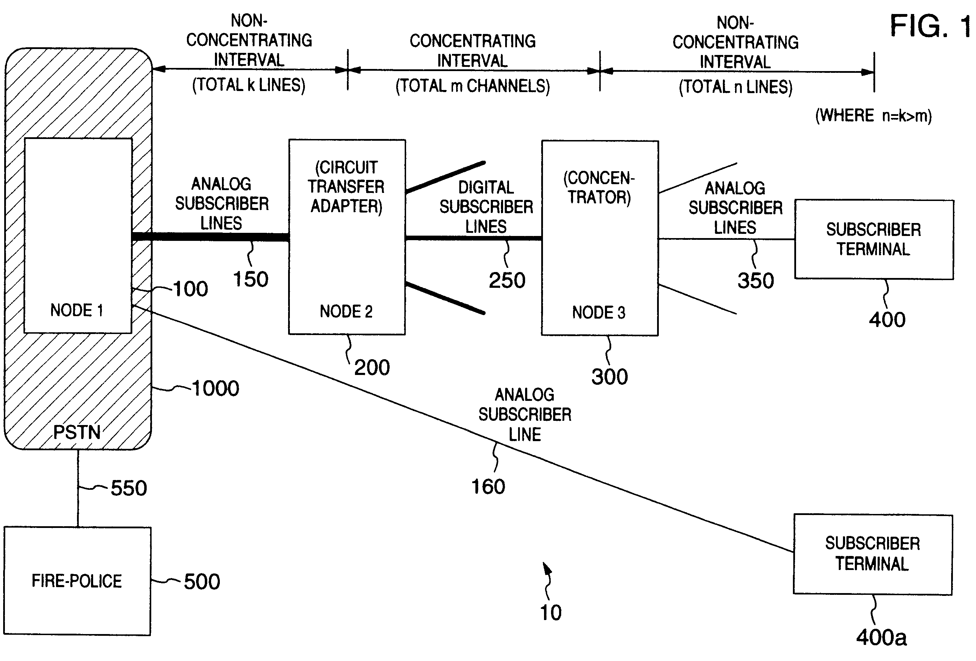

Fig. 1 shows a schematic construction of a communication network system 10 to which the invention is applied.

The network system 10 encloses a plurality of subscriber terminals 400. A node 3 (300) is connected to the subscriber terminals 400 through a plurality of analog subscriber lines (it is assumed that the sum of all of the subscriber lines which are finally connected to a node 2 is equal to n) 350, respectively. The analog subscriber lines 350 are connected to the subscriber terminals 400 in a one-to-one corresponding relation. A communication node 2 (200) is connected to the communication node 3 (300) through a plurality of digital subscriber lines (it is assumed that the sum of all of digital circuits which are finally connected to the node 2 is equal to m) 250, respectively. Each of the digital subscriber lines 250 has one or a plurality of channels. A node 1 (100) is connected to the node 2 (200) through a plurality (k lines) of analog subscriber lines 150. As analog subscriber lines 150, the lines of the number which is equal to or less than the total number of subscriber terminals 400 which are enclosed (connected) under the domination of the node 2 (200) which is connected are provided. The node 1 (100) also connects a subscriber terminal 400a through an analog subscriber line 160. Further, the node 1 (100) is connected to a fire-police 500 through a dedicated line (or subscriber line) 550 or, further, via a line in the PSTN. Specifically speaking, the dedicated line (or subscriber line) 550 is connected to a terminal which is installed in the fire-police 500. The node 1 (100) is a node in one of PSTNs 1000.

In the above construction, a total number k of lines of the analog subscriber lines 150, the total number n of lines of the analog subscriber lines 350, and the total number m of channels of the digital subscriber lines 250 generally have the relation of ($n \geq k > m$). When $n = k$, the digital subscriber line portion becomes a concentrating interval and the analog subscriber line portion becomes a non-concentrating interval.

A call origination from a certain subscriber terminal 400 is transferred to the terminal on the termination side through the node 3 (300), node 2 (200), node 1 (100), and PSTN 1000 (or another network (not shown) which is connected to the PSTN 1000), a connecting request is performed, and a communication is started between the subscriber terminal and the terminal on the termination side. As for a call termination to the subscriber terminal 400, a connecting request is transmitted to the node 1 (100) from the origination side terminal (or origination side terminal which is enclosed in another network which is connected to the PSTN 1000) which is enclosed in the PSTN 1000 and is, further, transferred to the node 2 (200) and node 3 (300). The call is terminated to the subscriber terminal 400 and the communication is started. The call origination from the subscriber terminal 400 to the fire-police 500 is performed in the case where the termination destination in the above call origination is the fire-police 500.

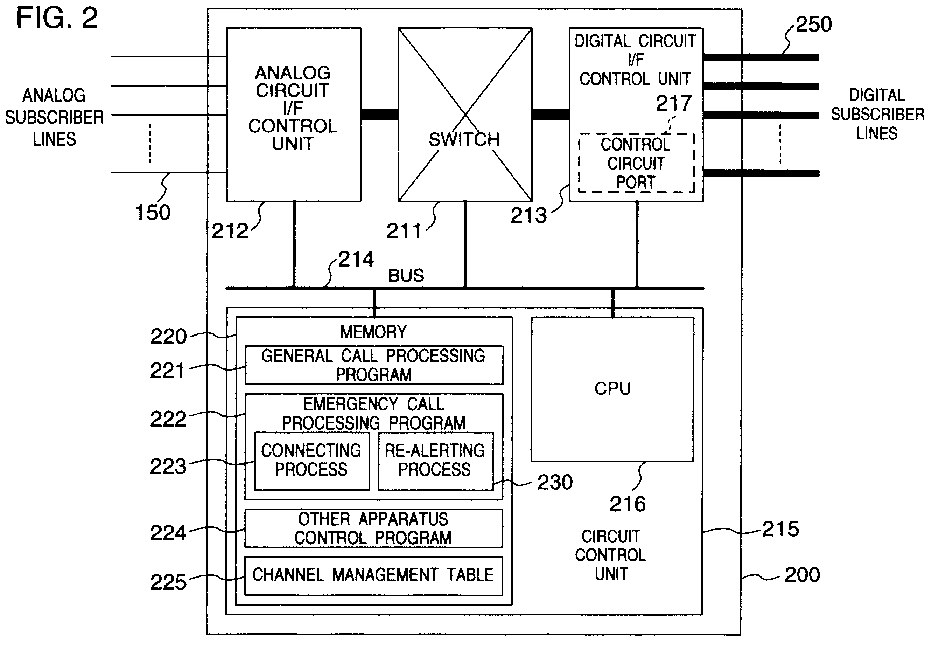

Fig. 2 shows an internal construction of the node 2 (200).

The node 2 (200) is constructed by: an analog circuit interface control unit (analog circuit port) 212 for performing an interface control for the node 1 (100); a digital circuit interface control unit (digital circuit port) 213 for performing an interface control for the node 3 (300); a switch 211 for performing a circuit switching; a circuit control unit 215 for performing a circuit switching control and a control of each control unit; and a bus 214 for performing a transfer of signals and data between the control units. Further, the circuit control unit 215 is constructed by: a CPU 216 for executing each process and arithmetic operation; and a memory 220 for holding each processing program (an emergency call processing program is also included), information, and data. Reference numeral 217 denotes a control circuit port contained in the digital circuit interface control unit 213. Further, an emergency call processing program 222 for executing an emergency call process, a general call processing program 221 for performing a general call process other than the emergency call process, and an apparatus control program 224 for controlling each control unit in the node 2 (200) have been stored in the memory 220. The memory 220 also includes a region of a channel management table 225 to hold subscriber information, circuit idle/busy information, and circuit connection information which are necessary for a circuit connection. The emergency call processing program 222 is made up of a portion 223 to perform a connecting process of an emergency call and a portion 230 to perform a realerting process of the emergency call.

In the case where the node 2 (200) encloses a plurality of nodes 3 (300) under the domination and each of the analog subscriber lines 150 corresponds to each of the subscriber terminals 400 which are enclosed under the domination of the node 2 (200) in a one-to-one corresponding relation, subscriber information (for example, telephone numbers) of the subscriber terminals 400, information (for example, apparatus numbers or the numbers of the lines which are connected) of the nodes 3 (300) as enclosing destinations, and information (for instance, the line number or port number) of each of the corresponding analog lines are associatively held in the channel management table 225 in the memory 220. The analog circuit interface control unit 212 shows its function for the node 1 (100) in a manner similar to the case where the fixed terminals 400 are connected.

Upon transmission from the subscriber terminal 400, a control for reading out the information in the memory 220 on the basis of the origination subscriber information (for example, origination number) transferred through the digital subscriber line 250 and selecting the analog line 150 on the connection destination side is executed by the circuit control unit 215. Upon termination to the subscriber terminal 400, the information in the memory 220 is read out on the basis of the information of the analog subscriber line 150 to which the call was terminated and the digital subscriber line 250 (node 3) on the connection destination side is selected. A control channel of the control circuit port 217 transmits and receives the control information to/from the node 3 (300), with being multiplexed on the digital subscriber line 250.

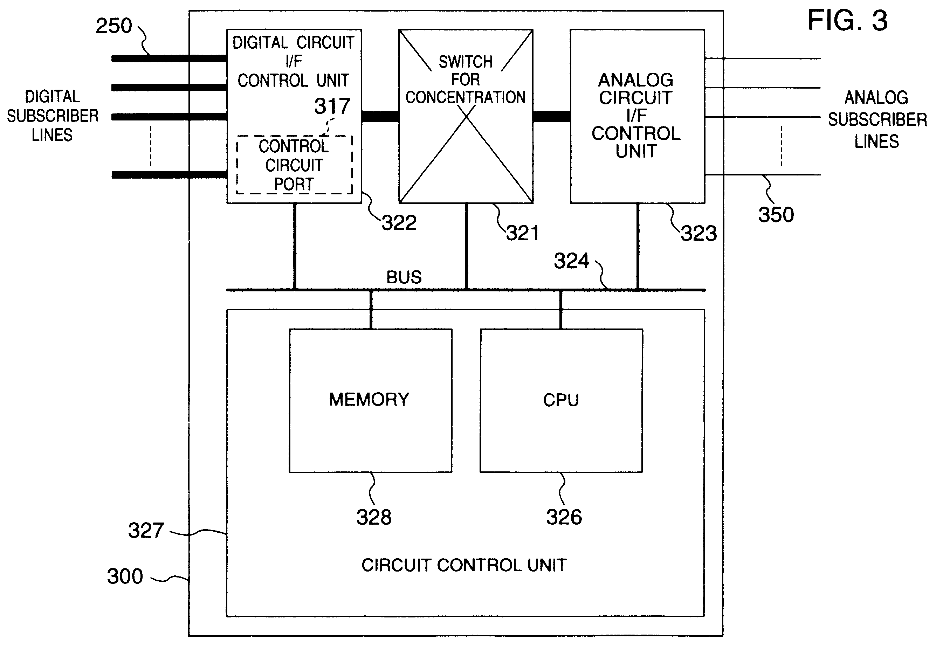

Fig. 3 shows an internal construction of the node 3 (300).

The node 3 (300) is constructed by: an analog circuit interface control unit (analog circuit port) 323 for performing an interface control for the subscriber terminals; a digital circuit interface control unit (digital circuit port) 322 for performing an interface control for the node 2 (200); a switch for concentration 321 to concentrate the analog subscriber lines 350 to the digital subscriber lines 250; a circuit control unit 327 for performing a control of each control unit; and a bus 324 for transferring signals and data between the control units. Further, the circuit control unit 327 is constructed by: a CPU 326 to execute each process and arithmetic operation; and a memory 328 to hold each processing program, information, and data. The analog circuit interface control unit 323 shows its function for the subscriber terminals 400 in a manner similar to the case where the node 1 (100) is connected. The nodes 2 and 3 mutually transmit information to control the digital lines 250 to control circuit ports 217 and 317, respectively. The control channel is used for the transmission. For example, if a digital circuit connecting the nodes 2 and 3 is the ISDN (Integrated Services Digital Network), a D channel is used as a control channel. The node 3 performs the concentrating function. When there is a call origination, the CPU 326 grasps the identification number of the call origination subscriber terminal from the line number of the analog line 350 to which the call origination was performed and transmits the ID number to the node 2 as an origination request signal through the control channel 218. When a call origination of an emergency call is detected, the CPU monitors the emergency call. When a disconnection of the emergency call is detected, the CPU notifies the node 2 of an emergency call disconnect signal through the control channel.

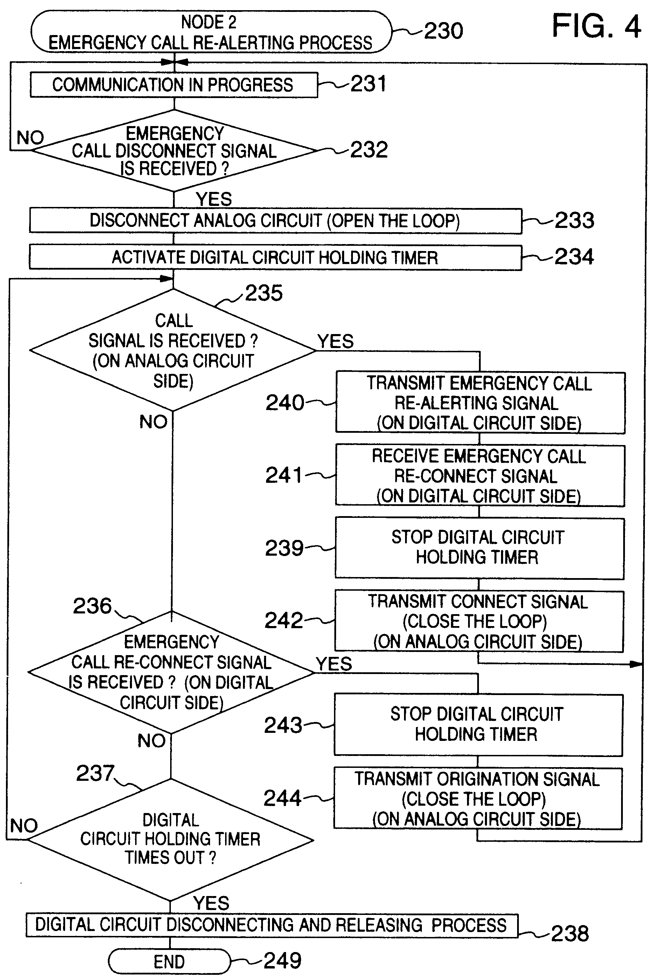

Fig. 4 shows a procedure of the emergency call re-alerting process 230 in the node 2 (200) and relates to the most characteristic portion of the invention.

Even when the subscriber terminal 400 which is connected via the node 3 (300), node 2 (200), node 1 (100), and PSTN 1000 by the line and the fire-police 500 are communicating, namely, even when they are emergency call connected, the state of the node 2 (200) is the same communication in progress 231 as the ordinary communication. That is, in step 231, it is not necessary to determine whether the communication is an emergency call communication in progress or not. Therefore, whether the emergency call disconnect signal from the digital subscriber line 250 side has been received or not is always monitored (step 232). When it is received, namely, when a signal showing that the subscriber terminal 400 (subscriber) disconnects the analog subscriber line 350 by the on-hook is transmitted through the node 3 (300) and digital subscriber line 250, the analog subscriber line 150 which has been connected so far for the emergency call communication is disconnected (step 233). In case of the analog subscriber line of a double-line type, a process to open a DC loop corresponds to step 233. Subsequently, a digital subscriber circuit holding timer 850 is activated (step 234). The digital line (channel) is held without disconnecting the digital subscriber line 250 (one channel in this line) which has been connected so far for the emergency call communication and without being used for another call. Thus, in the concentrating interval (digital subscriber line interval), the holding of a specific line by a specific subscriber is realized and this line can be exclusively used at the time of the subsequent re-alerting.

Before the digital circuit holding timer 850 reaches a predetermined time-out value (for example, 30 seconds), when a call signal is received (step 235) from the analog line disconnected by the analog line disconnecting process (step 233), namely, when a re-alerting request is received from the fire-police 500, an emergency call re-alerting signal for the subscriber terminal 400 which was emergency call disconnected in the above process is transmitted (step 240). This signal is a signal for notifying the subscriber terminal 400 (subscriber) of a fact that the re-alerting was requested from the fire-police 500. After the emergency call re-alerting signal was transmitted, when an emergency call re-connect signal is received from the digital subscriber line side (step 241), the digital circuit holding timer 850 is stopped (step 239). The digital line 250 side is shifted to a communicable state. After that, a connect signal is transmitted to the analog subscriber line (namely, fire-police 500) which received the call signal in the above process (step 242). The emergency call re-alerting signal is a signal to notify that the subscriber responded to a re-alerting request to the subscriber terminal 400 (subscriber) by the emergency call re-alerting signal. The communication which has once been interrupted by the disconnection from the subscriber terminal 400 in step 232 is restarted (step 231) by the transmitting process (step 242) of the connect signal. Thus, both of the re-alerting and the re-connect just after the end of the call disconnection realized in the conventional analog subscriber line are simultaneously realized.

A case where before the digital circuit holding timer 850 reaches the predetermined time-out value, an emergency call re-connect signal for the digital line (channel) in holding is received (step 236) from the digital line side without receiving the call signal (NO in step 235) from the analog line disconnected by the analog line disconnecting process (step 233) will now be described. That is, when a fact that the analog subscriber line 350 was shifted to the communicable state or that a communication restarting request was generated from the subscriber is notified to the node 2 (200) via the node 3 (300) and digital subscriber line 250 by the off-hook indicative of the communication restarting request by the subscriber terminal 400 (subscriber), the digital circuit holding timer 850 is stopped (step 243). The digital line side is shifted to the communicable state. After that, a connect signal is transmitted (step 244) to the analog subscriber line disconnected in the above process. The communication which has once been interrupted by the disconnection from the subscriber terminal 400 in step 232 is restarted (step 231) by the transmitting process (step 244) of the connect signal. Thus, a process similar to the restart of the communication by the off-hook of the subscriber terminal just after the end of the call disconnection realized in the conventional analog subscriber line is realized.

After the digital circuit holding timer 850 was activated in step 234, when the timer 850 times out (YES in step 237) without receiving the call signal (NO in step 235) from the analog line disconnected in the analog line disconnecting process (step 233) and without receiving the emergency call re-connect signal to the digital line (channel) in holding from the digital line side (NO in step 236), a disconnecting and releasing process of the holding digital line (channel) is executed (step 238). The emergency call re-alerting process 230 is finished (step 249).

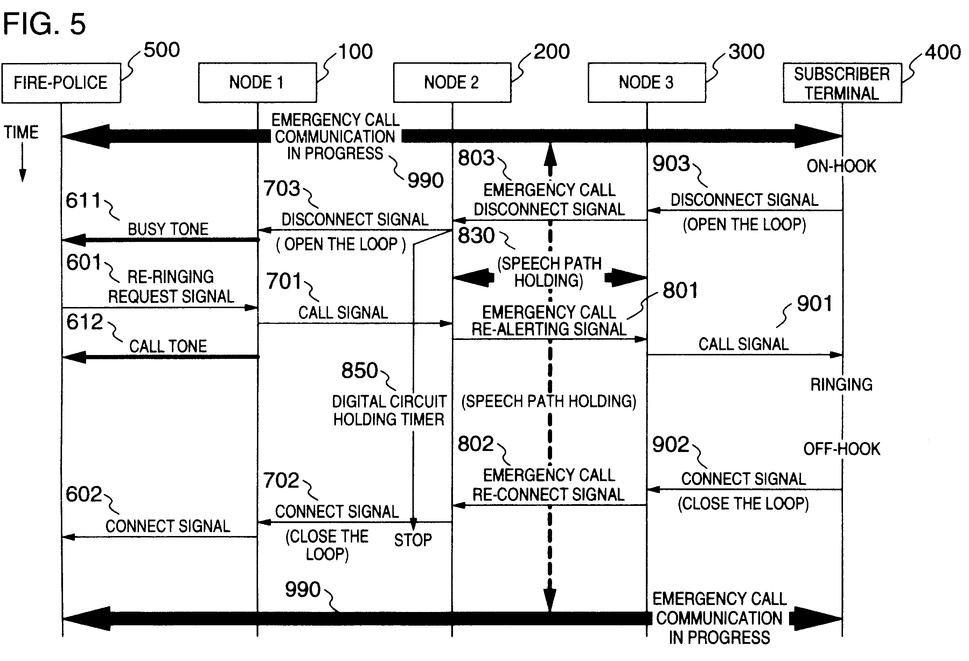

Each of the above processes is specifically disclosed as a process of the node 2 (200) in Figs. 5, 6, and 7 in association with a signal of each interface.

Fig. 5 shows a processing sequence until the subscriber responds to the re-alerting from the fire-police 500 and the communication is restarted after the end of the emergency call communication from the subscriber to the fire-police 500.

By the emergency call generation from the subscriber terminal 400, a circuit between the subscriber terminal 400 and the fire-police 500 enters a communication in progress 990 through the nodes 3, 2, and 1 and the PSTN 1000.

When the subscriber terminal 400 in the emergency call communication in progress is on-hooked by the subscriber (user), the subscriber terminal 400 transmits a disconnect signal 903 to the node 3 (300) in a manner similar to the case of the end of the ordinary communication. The disconnect signal 903 is transferred by opening the DC loop in the case where the analog subscriber line 350 is an analog subscriber line of the double-line type.

The node 3 (300) which received the disconnect signal 903 in the emergency call communication in progress transmits an emergency call disconnect signal 803 to the node 2 (200) from the information regarding, for instance, the connection destination of the emergency call. The emergency call disconnect signal is transmitted as a signal message or an information element in the signal message on the signal line of the digital subscriber line 250 and notifies the node 2 (200) of a fact that the analog subscriber line 350 side was disconnected in the emergency call communication in progress.

The sequence of Fig. 5 will now be described with reference to the processes in Fig. 4. When the emergency call disconnect signal 803 is received (step 232) in the emergency call communication in progress (step 231), the node 2 (200) in which the emergency call re-alerting process (step 230) is activating transmits a disconnect signal to the node 1 (100), thereby disconnecting and releasing the circuit connection to the node 1 (100). The disconnect signal 703 is a signal similar to the disconnect signal 903. That is, when seeing from the node 1, the disconnect signal 903 is seen as if it was transmitted from the subscriber terminal 400. The node 2 (200) activates the digital circuit holding timer 850 and holds the digital subscriber line (channel) 350 used so far for the emergency call communication without disconnecting and releasing and starts to prevent the line (channel) from being used for another call (step 234).

The node 1 (100) which received the disconnect signal 703 transmits a busy tone 611 to the fire-police 500 and generates an emergency call, thereby notifying that the line was disconnected from the subscriber which has performed the communication so far.

When re-alerting to the subscriber who disconnected the emergency call, the fire-police 500 transmits a re-ringing request signal 601 to the node 1 (100).

The node 1 (100) which received the re-ringing request signal 601 transmits a call signal 701 to the subscriber who disconnected the emergency call. In this instance, as a call signal 701 which is transmitted from the node 1 (100), a signal similar to the call signal which is transmitted to the subscriber terminal 400 directly connected to the node 1 (100) is transmitted.

The node 2 (200) which received the call signal 701 from the node 1 (100) during the activation of the digital circuit holding timer 850 transmits an emergency call re-alerting signal 801 as a signal message or an information element in the signal message onto the signal line (channel) of the holding digital subscriber line 250. The emergency call re-alerting signal 801 is a signal to notify the subscriber who has performed the emergency call communication so far of a fact that the re-alerting was executed from the fire-police 500.

The node 3 (300) which received the emergency call re-alerting signal 801 transmits a call signal 901 to the subscriber terminal 400, thereby re-alerting to the subscriber. The call signal 901 is a signal similar to the call signal 701.

The subscriber terminal 400 which received the call signal 901 rings, thereby notifying the user of the presence of a call. When the user off-hooks, the subscriber terminal 400 transmits a connect signal 902 to the node 3 (300). The connect signal 902 is transmitted by closing the DC loop in the case where the analog subscriber line 350 is an analog subscriber line of the double-line type.

The node 3 (300) which received the connect signal 902 transmits an emergency call re-connect signal 802 to the node 2 (200). The emergency call re-connect signal is transmitted as a signal message or an information element in the signal message on the signal line of the digital subscriber line, thereby notifying the node 2 (200) of a fact that the analog subscriber line 350 side was connected.

When the emergency call re-connect signal 802 is received (step 241), the node 2 stops the digital circuit holding timer 805 (step 239) and transmits a connect signal 702 to the node 1 (100), thereby connecting the line to the node 1 (100). The connect signal 702 is a signal similar to the connect signal 902.

The node 1 (100) which received the connect signal 702 transmits a connect signal 602 to the fire-police 500 and restarts the emergency call communication 990 with the subscriber who requested the re-alerting.

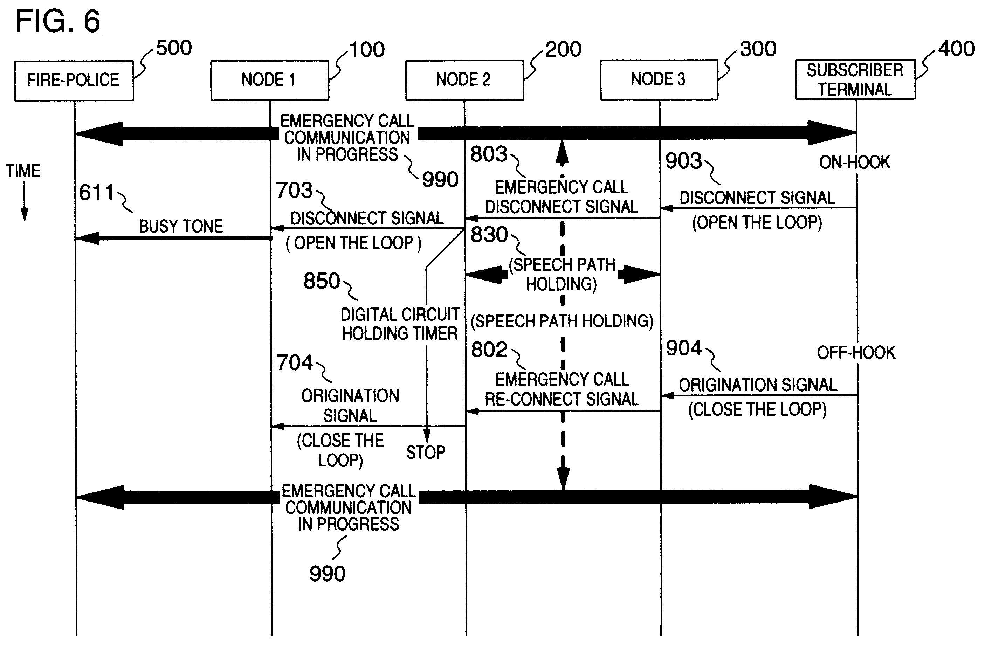

Fig. 6 shows a processing sequence until the subscriber who once finished (on-hooked) the emergency call communication restarts the communication just after the on-hook.

A sequence from the on-hook in the subscriber terminal 400 to a time point until the busy tone 611 is transmitted to the fire-police 500 is similar to the foregoing sequence shown in Fig. 5 and associated to Fig. 5.

When the user off-hooks just after the on-hook, the subscriber terminal 400 transmits an origination signal 904 to the node 3 (300) and connects the line to the node 3 (300). The origination signal 904 is transferred by closing the DC loop in the case where the analog subscriber line 350 is an analog subscriber line of the double-line type. The origination signal 904 is electrically similar to the connect signal 902.

The node 3 (300) which receives the origination signal 904 from the subscriber terminal 400 just after the emergency call disconnect signal 803 was transmitted transmits the emergency call re-connect signal 802 to the node 2 (200).

The node 2 (200) which receives the emergency call re-connect signal 802 during the activation of the digital circuit holding timer 850 stops the timer (step 243 in Fig. 4), transmits an origination signal 704 to the node 1 (100) (step 244 in Fig. 4), and connects the line to the node 1 (100). The origination signal 704 is a signal similar to the origination signal 904.

Thus, the line from the subscriber terminal 400 to the fire-police 500 is re-connected and the emergency call communication 990 is restarted.

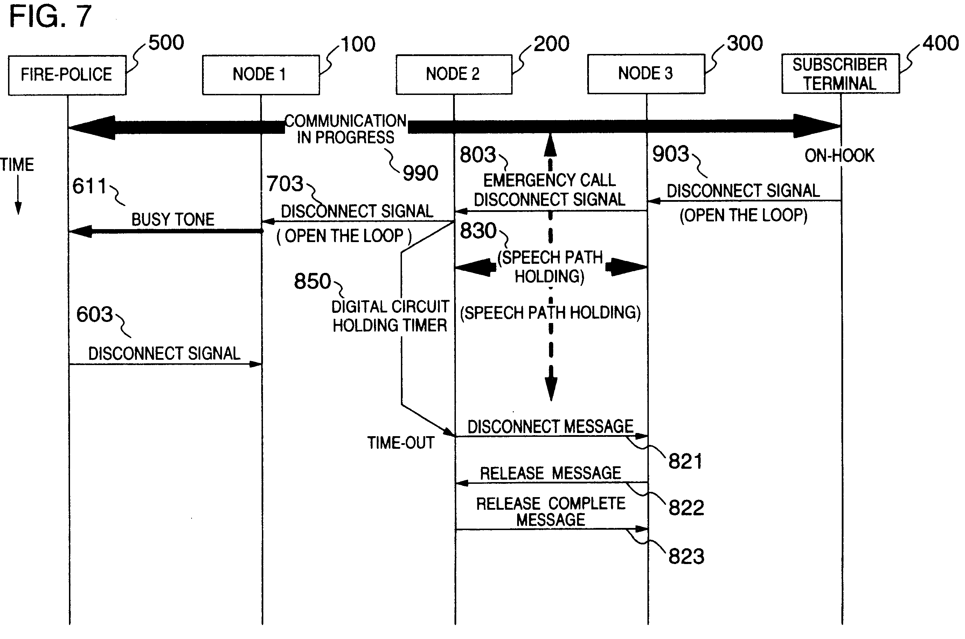

Fig. 7 shows a processing sequence for disconnecting and releasing the line held for the emergency call re-alerting.

A sequence from the on-hook in the subscriber terminal 400 to a time point until the busy tone is transferred to the fire-police 500 is similar to the foregoing sequence shown in Fig. 5 and associated with Fig. 5.

In the node 2 (200) during the activation of the emergency call re-alerting process 230, when the digital circuit holding timer 850 times out (237), for instance, in case of using the ISDN, by transmitting and receiving a disconnect message 821 for the node 3 (300), a release message 822, and a release complete message 823, the digital subscriber line (channel) 350 held so far is disconnected and released. By finishing the above process, all of the emergency call processes between one subscriber terminal 400 and the fire-police 500 in the present system are finished.

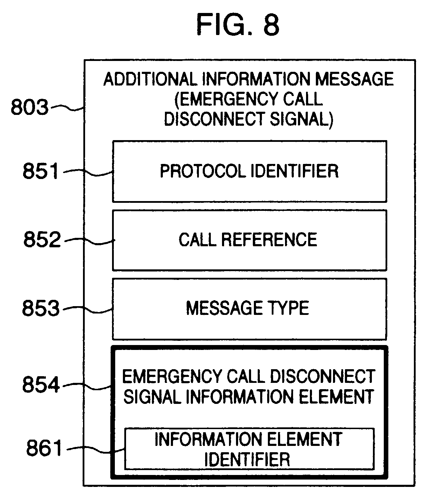

Fig. 8 shows an example of a signal (message) format of the emergency call disconnect signal 803 which is transmitted from the node 3 (300) to the node 2 (200) in the processing sequences of Figs. 5, 6, and 7 mentioned above.

As for the emergency call disconnect signal 803, even if it is transmitted and received, since interface states of the node 2 (200) and node 3 (300) do not change ("communication in progress" is continued), in case of using a UNI message of the ISDN, an additional information message is used to transmit the emergency call disconnect signal 803.

An internal construction of the additional information message which is used for transfer of the emergency call disconnect signal 803 includes: a protocol identifier 851 which is determined by the standard recommendation; a call reference 852; a message type 853; and an emergency call disconnect signal information element 854 to indicate (instruct) the transfer of the emergency call disconnect signal 803. The emergency call disconnect signal information element 854 is made up of only an information element identifier 861 in order to show the transmission of the emergency call disconnect signal 803 by itself.

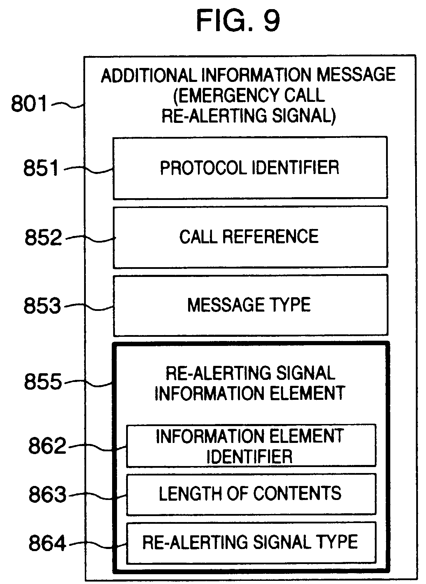

Fig. 9 shows an example of a signal (message) format of the emergency call re-alerting signal 801 which is transmitted from the node 2 (200) to the node 3 (300) in the processing sequence in Fig. 5.

As for the emergency call re-alerting signal 801, even if it is transmitted and received, since interface states of the node 2 (200) and node 3 (300) do not change ("communication in progress" is continued), in case of using a UNI message of the ISDN, the additional information message is used to transmit the emergency call re-alerting signal 801.

An internal construction of the additional information message which is used for transfer of the emergency call re-alerting signal 801 includes: the protocol identifier 851 which is determined by the standard recommendation; call reference 852; message type 853; and an emergency call re-alerting signal information element 855 to indicate (instruct) the transfer of the emergency call re-alerting signal 801. The emergency call re-alerting signal information element 855 is constructed by an information element identifier 862, a type 864 of re-alerting signal 801, and a length 863 of contents indicative of the number of octets after the re-alerting signal 801.

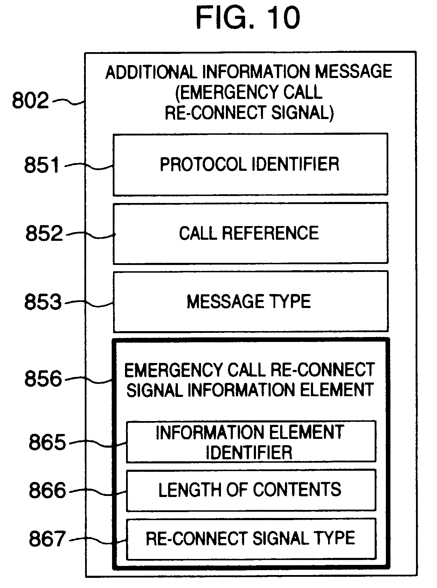

Fig. 10 shows an example of a signal (message) format of the emergency call re-connect signal 802 which is transmitted from the node 3 (300) to the node 2 (200) in the processing sequence in Fig. 5 or Fig. 6.

As for the emergency call re-connect signal 802, even if it is transmitted and received, since interface states of the node 2 (200) and node 3 (300) do not change ("communication in progress" is continued), in case of using a UNI message of the ISDN, an additional information message is used to transmit the emergency call re-connect signal 802.

An internal construction of the additional information message which is used for transfer of the emergency call re-connect signal 802 includes: the protocol identifier 851 which is determined by the standard recommendation; call reference 852; message type 853; and an emergency call re-connect signal information element 856 to indicate (instruct) the transfer of the emergency call re-connect signal 802. The emergency call re-connect signal information element 856 is constructed by an information element identifier 865 to show the transfer of the emergency call reconnect signal 802, a re-connect signal type 867 showing a format (transfer by a polarity inversion or the like) of the emergency call re-connect signal in the analog subscriber line 150, and a length 866 of contents indicative of an information length of the re-connect signal type 863.

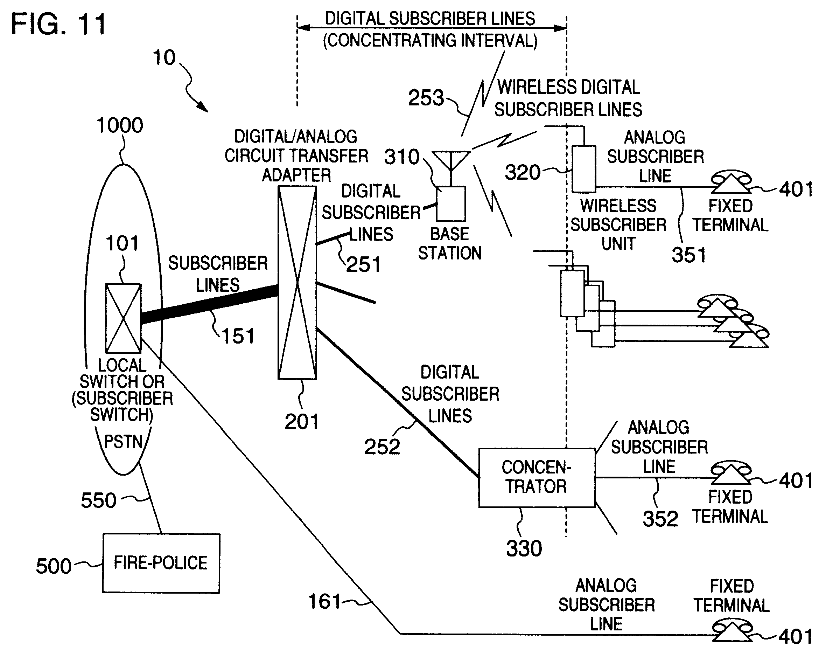

Fig. 11 shows a specific construction of the communication network system 10 shown in Fig. 1.

This network encloses a plurality of fixed terminals 401. The fixed terminal 401 is an example of the fixed terminals 400 shown in Fig. 1. A wireless subscriber unit 320 is connected to one or a plurality of fixed terminals 401 through analog subscriber lines 351. The wireless subscriber unit 320 is an example of the node 3 (300) shown in Fig. 1. A base station 310 is connected to one or a plurality of wireless subscriber units 320 through wireless digital subscriber lines 253. A digital/analog circuit transfer adapter 201 is connected to one or a plurality of base stations 310 through digital subscriber lines 251. The digital/analog circuit transfer adapter 201 is an example of the node 2 (200) shown in Fig. 1. Further, specifically speaking, the digital/analog circuit transfer adapter 201 is, for instance, an apparatus having a switching function such as local switch, MSC (Mobile Switching Center), PBX, or BSC (Base Station Controller). The digital subscriber line 251 and wireless digital subscriber line 253 as well as the base station 310 are examples of the digital subscriber line 250 shown in Fig. 1. A local switch (or subscriber switch) 101 is connected to one or a plurality of digital/analog circuit transfer adapters 201 through subscriber lines 151. The local switch 101 is an example of the node 1 (100) shown in Fig. 1. The subscriber line 151 is an example of the analog subscriber line 150 shown in Fig. 1. A concentrator 330 is connected to one or a plurality of fixed terminals 401 through analog subscriber lines 352. The concentrator 330 is an example of the node 3 (300) shown in Fig. 1. Further, specifically speaking, for example, the concentrator 330 is an apparatus having an exchange/concentrating function such as a PBX. The concentrator 330 is connected to the digital/analog circuit transfer adapter 201 through the digital subscriber line 252. There is also an existing connection format such that the fixed terminals 401 are connected to the local switch 101 through analog subscriber lines 161.

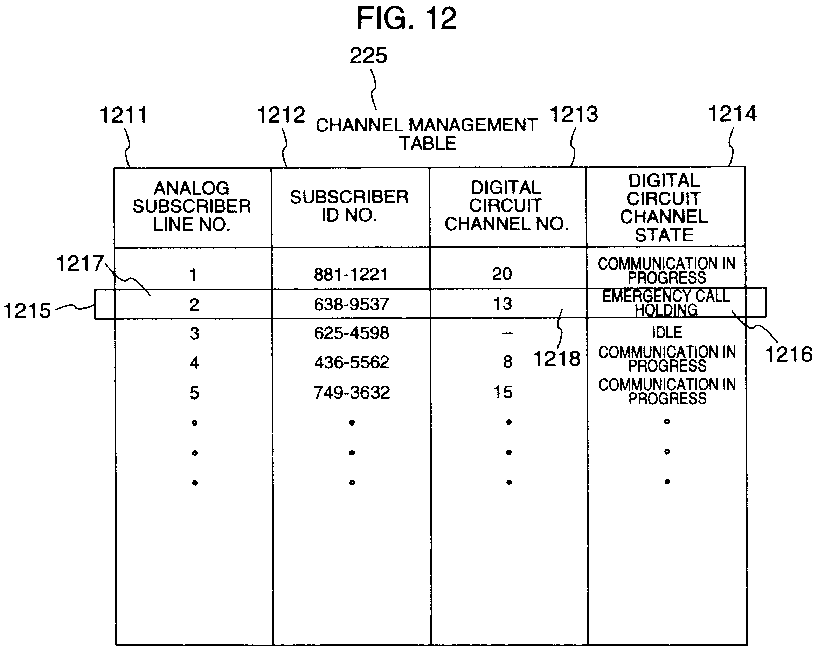

Fig. 12 shows an example of a channel management table 225 constructed in the memory 220 in the node 2 (200) shown in Fig. 2.

The channel management table 225 is a table for managing the relation between the analog subscriber lines 150 which are being used at the time of the line connection and the channels of the digital subscriber lines 250 which are connected to the analog subscriber lines 150 and for managing using situations (states) of the channels of the digital subscriber lines 250. The channel management table 225 includes: a column 1211 to store the numbers of the analog subscriber lines 150; a column 1212 to store the subscriber ID numbers of the subscriber terminals 400; a column 1213 to store the channel numbers of the digital subscriber lines 250; and a column 1214 to store the channel states of the digital lines 250.

For example, in case of transmitting from the subscriber terminal 400, the subscriber ID number (for example, telephone number) 1212 of the subscriber terminal 400 is transferred to the node 2 through the control channel together with a message to request a call connection and the analog subscriber line 150 corresponding to the subscriber ID number is selected by referring to the channel management table 225. A speech path is set by connecting the selected analog subscriber line 150 and a specific channel of the digital subscriber line 250 selected by an instruction included in the message to request the call connection or by the judgment of the node 2. In the selection which is performed by the node 2 or 3, the digital line which is not used is mainly selectively assigned. In this instance, the channel number of the selected digital subscriber line and the channel state of the digital subscriber line are stored into the columns 1213 and 1214 of the channel management table 225 in correspondence to the line number of the analog subscriber line 150 of the column 1211 and the subscriber ID number of the column 1212, respectively. The execution of the table management of the digital lines (concentrating intervals) which are used is useful at the time of the re-alerting or connection of the emergency call. As channel states of the digital line, three states of "communication in progress" of a state in which the channel is used as an ordinary call or an emergency call, "idle" of a state in which it is never used, and "emergency call holding" of a state where the emergency call is held (line is held) by the emergency call realerting process (step 230) shown in Fig. 4 are defined. According to circumstances, the states can be further classified in detail and registered. When the analog subscriber line 150 side is again connected (when the emergency call re-connect signal 802 is received) from the emergency call holding state, if a result obtained by retrieving the number of the digital line which issued the re-connect signal indicates the digital line number in the emergency call holding on the channel management table 225, the analog subscriber line number registered in the table as a set together with the digital line number can be extracted. Therefore, the analog subscriber line 150 on the re-connection destination side can be unconditionally selected.

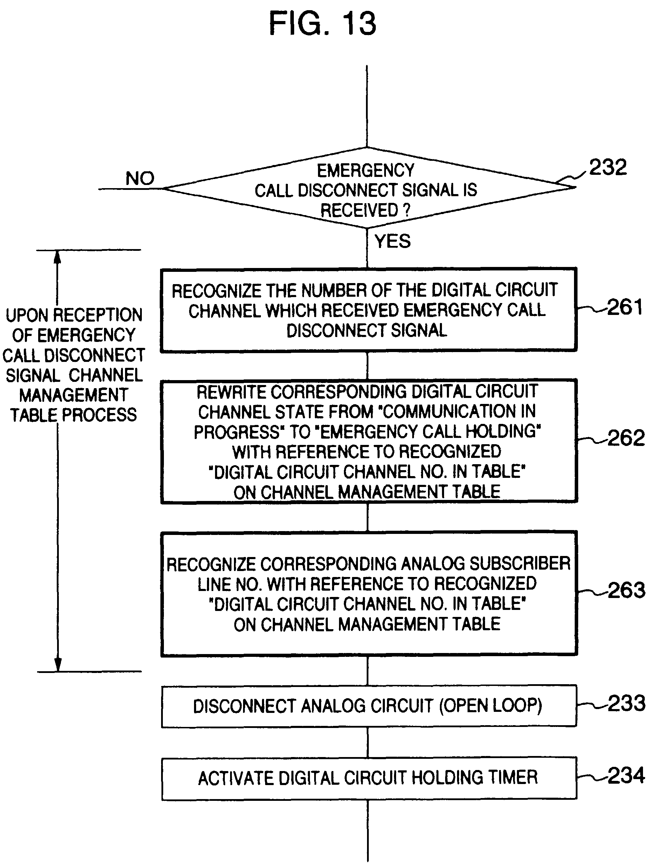

Fig. 13 shows an example of a channel management table upon reception of the emergency call disconnect signal as one of accessing processes to the channel management table 225 shown in Fig. 12 in the flow of the emergency call re-alerting process 230 in the node 2 shown in Fig. 4.

This process is activated when the emergency call disconnect signal 803 is received (step 232) in the emergency call re-alerting process 230. When the emergency call disconnect signal 803 is received, the channel number in the digital line concerned with this signal is recognized (step 261). The number which coincides with the channel number is retrieved in the column 1213 of "digital circuit channel number" in the channel management table 225, thereby extracting a row 1215 including such a number. A "digital circuit channel state" value 1216 of the channel number included in the same row is rewritten from "communication in progress" to "emergency call holding" (step 262). Similarly, "analog subscriber line number" 1217 which belongs to the same row is extracted (step 263). A loop of the analog line ("2") having the extracted analog subscriber line number 1217 is opened and this analog subscriber line is disconnected (step 233).

By the channel management table process upon reception of the emergency call disconnect signal, the corresponding analog subscriber line 150 is released while holding the digital circuit channel 250.

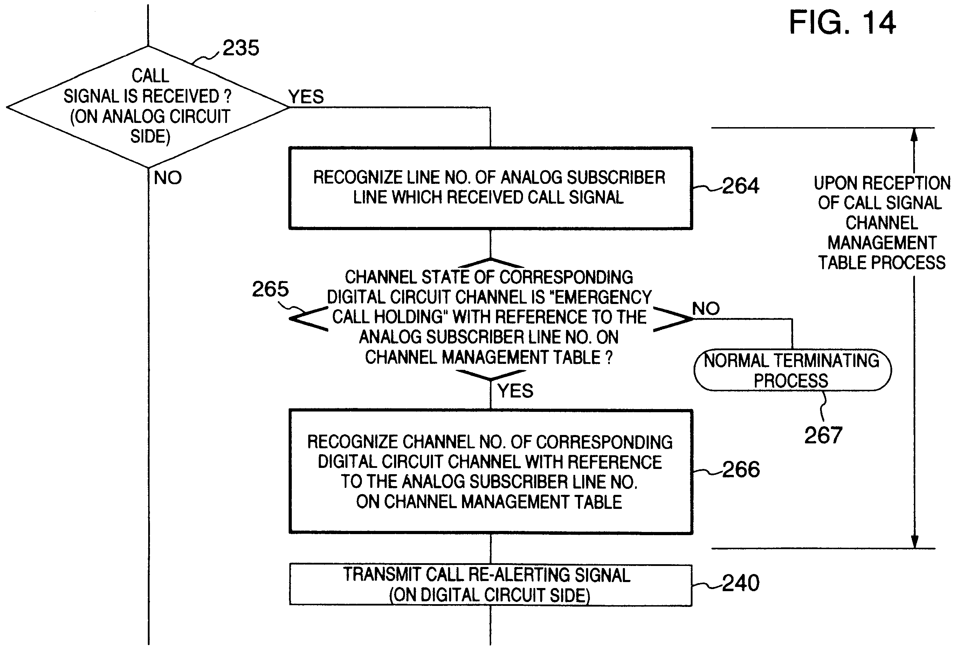

Fig. 14 shows an example of a channel management table process upon reception of the call signal as one of the accessing processes to the channel management table 225 shown in Fig. 12 in the flow of the emergency call re-alerting process 230 in the node 2 shown in Fig. 4.

This process is activated when the call signal 701 is received (YES in step 235) in the emergency call re-alerting process 230. When the call signal 701 is received, the number of the analog subscriber line 150 which received this signal is recognized (step 264). The number which coincides with the recognized line number is retrieved in the "analog subscriber line number" column 1211 on the channel management table 225, thereby extracting the row 1215 including this line number. The value of the "digital circuit channel state" 1216 included in the same row is confirmed (step 265). When the digital circuit channel state value is "communication in progress", the ordinary terminating process (step 267) is activated. When the digital circuit channel state value is "emergency call holding", a "digital circuit channel number" 1218 which belongs to the same row is similarly extracted (step 266). The emergency call re-alerting signal 801 for the digital circuit channel ("13") having the extracted digital circuit channel number is transmitted (step 240).

By the channel management table process upon reception of the call signal, the call signal 701 received from the analog subscriber line 150 side can be transmitted to the node 3 through the digital line 250.

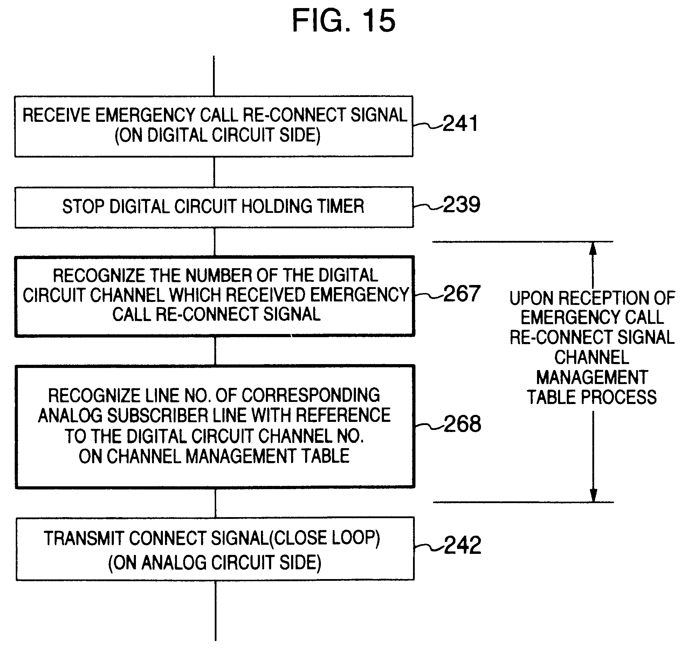

Fig. 15 shows a channel management table process upon reception of the emergency call re-connect signal as one of the accessing processes to the channel management table 225 shown in Fig. 12 in the flow of the emergency call re-alerting process 230 in the node 2 shown in Fig. 4.

This process is activated after the emergency call re-connect signal 802 was received (step 241) and the digital circuit holding timer was stopped (step 239) in the emergency call re-alerting process 230. When the emergency call re-connect signal 802 is received, the channel number in the digital line concerned with the signal 801 is recognized (step 267). The number which coincides with the channel number is retrieved in the "digital circuit channel number" column 1213 on the channel management table 225, thereby extracting the row 1215 including this number. The "analog subscriber line number" 1217 included in this row is extracted (step 268). A loop of the analog line having the extracted analog subscriber line number is closed and the connect signal 702 is transmitted (step 242).

By the channel management table process upon reception of the emergency call re-connect signal, the connect signal (emergency call re-connect signal) received from the subscriber terminal 400 through the node 3 is transferred to the node 1 through the analog subscriber line 150 and the re-connection of the call is realized.

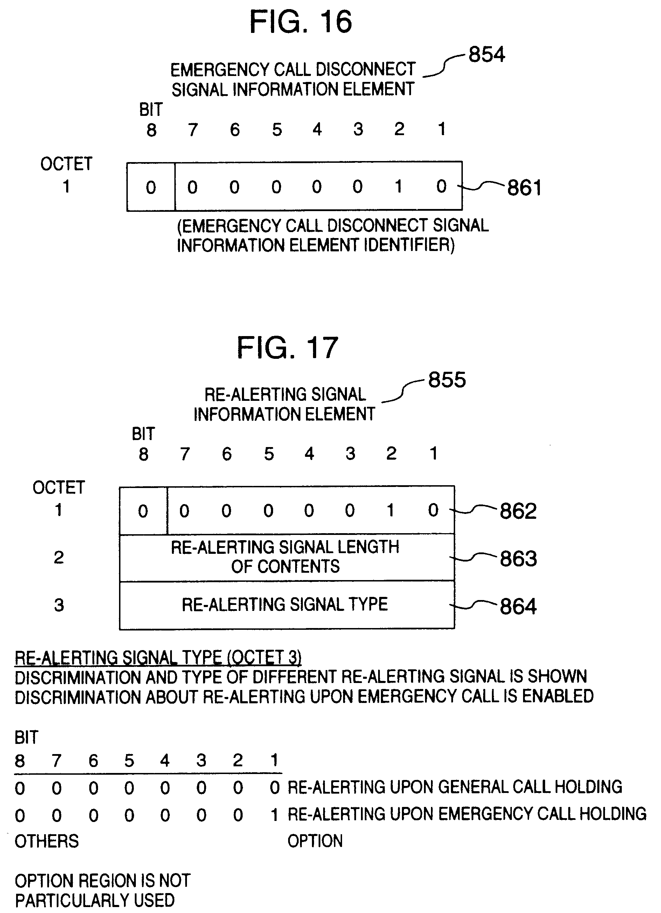

Fig. 16 shows an example of a specific bit coding of the emergency call disconnect signal information element 854 shown in Fig. 8.

In the case where the emergency call disconnect signal information element 854 is disclosed in accordance with a bit coding rule similar to the information element which is specified by the ITU-T (International Telecommunication Union) Recommendation Q.931, since the present information element is a single octet information element, bits such that bit 8 is set to "1" and this information element is specified by the other seven bits are assigned to the field 861 of the information element identifier (first octet) of the emergency call disconnect signal information element 854. In another case where it is necessary to add information, it is specified after the second octet. In this case, however, bit 8 of the first octet is equal to "0".

Since the emergency call disconnect signal information element 854 is not specified by the ITU-T Recommendation, it cannot be used in the code group 0 (ITU-T Q.931 information element) and is used as an information element (information element that is peculiar to a public network or a private network) of another code group, for example, a code group 6.

Fig. 17 shows an example of a specific bit coding of the re-alerting signal information element 855 shown in Fig. 9.

In the case where the re-alerting signal information element 855 is disclosed in accordance with a bit coding rule similar to the information element which is specified by the ITU-T Recommendation Q.931, since the present information element is a plural octet information element, bits such that bit 8 is set to "0" and this information element is specified by the other seven bits are assigned to the field 862 of the information element identifier (first octet) of the re-alerting signal information element 855. The second octet is the field 863 showing a length of contents of the present information element and, in case of the information element, specifically speaking, since the content length of the third octet or less is equal to 1, a bit coding is set to "00000001". The third octet is the field 864 showing a type of the re-alerting signal and indicates the type of the call in holding for performing the re-alerting. Specifically speaking, "re-alerting upon general call holding" and "re-alerting upon emergency call holding" can be selected. In the case where the present information element is included in the emergency call re-alerting message and is used, the present octet is used as "re-alerting upon emergency call holding" "00000001".

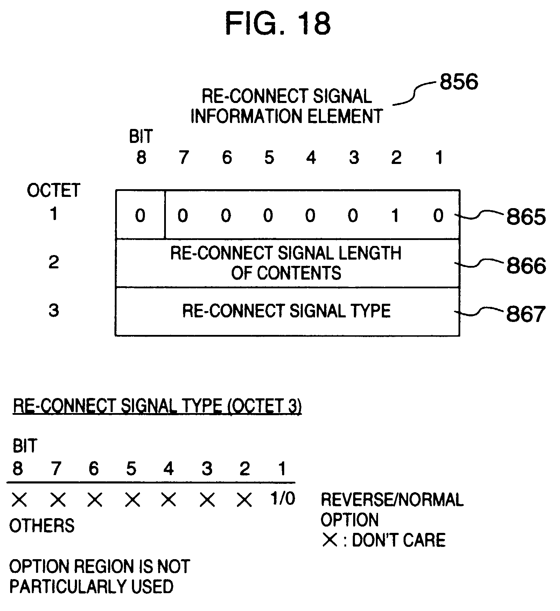

Fig. 18 shows an example of a specific bit coding of the re-connect signal information element 856 shown in Fig. 10.

In the case where the re-connect signal information element 856 is disclosed in accordance with a bit coding rule similar to the information element which is specified by the ITU-T Recommendation Q.931, since the present information element is a plural octet information element, bits such that bit 8 is set to "0" and this information element is specified by the other seven bits are assigned to the field 865 of the information element identifier (first octet) of the re-connect signal information element 856. The second octet is the field 866 showing a length of contents of the present information element and, in case of the information element, specifically speaking, since the content length of the third octet or less is equal to 1, a bit coding is set to "00000001". The third octet is the field 867 showing a type of the re-connect signal and indicates the electrical state in case of transmitting this signal by the analog subscriber line of the double-line type. Specifically speaking, when bit 1 is set equal to "0", "normal" (polarity of default) is set. When bit 1 is equal to "1", "reverse" (polarity is inverted) is set.

**Claims**

1. A communication system (10) comprising:

   subscriber terminals (400) which are identified by identification numbers;
   a concentrator (300) including first analog circuit ports (323) for connecting n (n is a natural number) said subscriber terminals, first digital circuit ports (322) for connecting m (m is a natural number: n > m) digital circuits (250), and first circuit assigning means (327) for, when there is a call origination from said subscriber terminal, assigning a first digital circuit port which is not used for communication to said subscriber terminal which performed the call origination; and
   a circuit transfer adapter (200) having m second digital circuit ports (213) which construct pairs together with said first digital circuit port provided for said concentrator, second analog circuit ports having k (k is a natural number: k > n) analog circuits which construct pairs together with said first analog circuit ports, and second circuit assigning means (215) for converting information which is input to a second digital circuit port into a second analog circuit port and outputting,
   wherein said concentrator further has first call control means for detecting an identification number of said origination subscriber terminal at time of the call origination, forming an origination request signal including the identification number of said origination subscriber terminal, and outputting to said first digital circuit port, and
   said circuit transfer adapter further has:

   a circuit management table (225) for, when said origination request signal is received by said second digital circuit port, storing a set of the number of the second digital circuit port which received said origination request signal, the identification number of said origination subscriber terminal included in said origination request signal, and a using state of said second digital circuit port; and
   holding means (215) for holding said second digital circuit port when said using state of the second digital circuit port which is stored in said circuit management table indicates an emergency call holding period of time.

2. The system of claim 1, wherein when an emergency call re-alerting signal is received from said second analog circuit port while said second digital circuit is held, said origination subscriber terminal regarding said emergency call is called through said second digital circuit port held by said holding means.

3. The system of claim 1, wherein when the origination signal is received from said first analog circuit port regarding said emergency call while said second digital circuit is held, the emergency call is reconnected through said first digital circuit port used at the time of the call origination of said emergency call and said second digital circuit port held by said holding means.

4. A circuit transfer adapter (200) comprising:

   a digital circuit port (213) for connecting m (m is a natural number) digital circuits (250);
   analog circuit ports (212) for connecting k (k is a natural number: k > m) analog circuits (150) and transmitting information from said digital circuit ports;
   a control circuit port (217) for transmitting control information of said digital circuit port;
   call control means (215) for assigning said digital circuit port which is designated by a control signal to any one of said analog circuit ports and controlling on the basis of the control signal which is received through said control circuit port;
   a circuit management table (225) for storing said digital circuit ports assigned by said call control means, analog circuit ports, and using states of said digital circuit ports; and
   holding means (215) for holding a digital circuit port regarding an emergency call after said emergency call was disconnected in a case where a signal to request a call origination of said emergency call is transmitted as said control signal,

wherein while said digital circuit port regarding the emergency call is held by said holding means, a message indicating an emergency call holding is stored as the using state of the digital circuit port in said circuit management table.

5. The adapter of claim 4, wherein

when said call control means receives a call signal from said analog circuit port while said digital circuit port is held by said holding means,

said call control means retrieves said circuit management table on the basis of the analog circuit port which received said call signal and, when the using state of said digital circuit port corresponding to said analog circuit port indicates the emergency call holding, an emergency call re-alerting signal is output as said control signal to said control circuit port.

6. The adapter of claim 4,

wherein when said call control means receives an emergency call re-connect signal from said control circuit port while said digital circuit port is held by said holding means,

said call control means retrieves said circuit management table on the basis of the digital circuit port regarding said emergency call re-connect signal, and in the case where the using state of said digital circuit port indicates the emergency call holding, said call control means connects said analog circuit port corresponding to said digital circuit and opens said analog circuit port.

7. A concentrator (300) comprising:

analog circuit ports (323) which enclose n (n is a natural number) subscriber terminals (400); digital circuit ports (322) for connecting m (m is a natural number: n > m) digital circuits (250) on the network side and transmitting information from said analog circuit ports; a control circuit port (317) for transmitting control information of said digital circuit port; and call control means (327) for, when there is a call origination from any one of said analog circuit ports, assigning the digital circuit port which is not used for a communication to said analog circuit port which performed the call origination,

wherein when said call origination is an emergency call, if a disconnection of the emergency call is detected from the analog circuit port regarding the emergency call, said call control means outputs an emergency call disconnect signal to said control circuit port.

8. The concentrator of claim 7, wherein when an emergency call re-alerting signal is received through said control circuit port, said call control means calls the subscriber terminal to be called through said analog circuit port on the basis of said emergency call realerting signal.

9. The concentrator of claim 7, wherein when a connect signal is received through said analog circuit port regarding said emergency call, said call control means transmits an emergency call re-connect signal through said control circuit port and re-connects the emergency call through said digital circuit port used at the time of the communication of said emergency call.

10. A communicating method in a communication network system (10) comprising:

a plurality of subscriber terminals (400);
a public switched telephone network (PSTN) (1000);
communication lines (150, 250, 350) for connecting said plurality of subscriber terminals and said PSTN, said communication line having a concentrating interval (250) of the number of communication lines smaller than the number of said plurality of subscriber terminals at intermediate positions;
a first communication node (200) inserted between said communication line (first line interval (150)) on said PSTN side and one end portion of said concentrating interval; and
a second communication node (300) inserted between another end portion of said concentrating interval and said communication line (second line interval (350)) on said subscriber terminal side,

said communicating method comprising the steps of:

detecting (232) that one of said subscriber terminals disconnected an emergency call communication which had been performed through one line in said concentrating interval; and
holding (830) said one line in said concentrating interval by said first and second communication nodes in response to the detection of the disconnection of said emergency call communication.

11. The method of claim 10, further comprising the steps of:

transmitting an emergency call disconnect signal (803) showing the disconnection of the emergency call from said second communication node to said first communication node in response to a disconnect signal (903) from said one subscriber terminal; and

while holding the disconnection of said one line in said concentrating interval by said first communication node in response to said emergency call disconnect signal, transmitting a disconnect signal (703) similar to said disconnect signal from said first communication node to one corresponding line in said first line interval.

12. The method of claim 11, wherein said first communication node includes a management table (225) having fields for storing corresponding relations among each line number (1211) of said first line interval, each identification number (1212) of said subscriber terminals, each line number (1213) of said concentrating intervals, and a state (1214) of each communication line of said concentrating interval, and the holding of the disconnection of said one line in said concentrating interval is stored as state information into a corresponding state field in said management table.

13. The method of claim 11 or 12, further comprising the step of restricting (850) a holding period of time of the disconnection of said one line in said concentrating interval to a period within a predetermined time by using a timer.

14. The method of claim 13, further comprising the steps of:

referring to said management table in said first communication node in response to a call signal (701) from the line in said first line interval; when it is discriminated on the basis of the reference to said management table that said one line in said concentrating interval corresponding to said call signal is in a disconnection holding, resetting said timer and transmitting an emergency call re-alerting signal (801) from said first communication node to said second communication node; and transmitting a call signal (901) similar to said call signal to the corresponding subscriber terminal from said second communication node in response to said emergency call re-alerting signal.

15. The method of claim 13, further comprising the steps of:

transmitting an emergency call re-connect signal (802) indicative of a re-connection of the emergency call from said second communication node to said first communication node in response to an origination signal (904) from said one subscriber terminal;

referring to said management table in said first communication node in response to said emergency call reconnect signal; when it is discriminated on the basis of the reference to said management table that said one line in said concentrating interval corresponding to said origination signal is in a disconnection holding, resetting said timer and transmitting an origination signal (704) similar to said origination signal from said first communication node to one corresponding line in said first line interval.

16. The method of claim 14 or 15, wherein said emergency call disconnect signal and said emergency call re-alerting or re-connect signal are transmitted through a control channel multiplexed on said one line in said concentrating interval.

17. A communication network system (10) comprising:

a plurality of subscriber terminals (400); a public switched telephone network (PSTN) (1000); communication lines (150, 250, 350) for connecting said plurality of subscriber terminals and said PSTN, said communication line having a concentrating interval (250) of the number of communication lines smaller than the number of said plurality of subscriber terminals at intermediate positions; a first communication node (200) inserted between said communication line (first line interval (150)) on said PSTN side and one end portion of said concentrating interval; and a second communication node (300) inserted between another end portion of said concentrating interval and said communication line (second line interval (350)) on said subscriber terminal side,

wherein when one of said subscriber terminals disconnects an emergency call communication which has been executed through one line in said concentrating interval, said first and second communication nodes hold said one line in said concentrating interval.

18. The system of claim 17, wherein in response to a disconnect signal from said one subscriber terminal, said second communication node transmits an emergency call disconnect signal showing a disconnection of the emergency call to said first communication node, and in response to said emergency call disconnect signal, said first communication node transmits a disconnect signal similar to said disconnect signal to one corresponding line in said first line interval while holding the disconnection of said one line in said concentrating interval.

19. The system of claim 18, wherein said first communication node includes a management table having fields for storing corresponding relations among each line number of said first line interval, each identification number of said subscriber terminals, each line number of said con centrating intervals, and a state of each communication line of said con centrating interval, and the holding of the disconnection of said one line in said concentrating interval is stored as state information into a corresponding state field in said management table.

20. The system of claim 18 or 19, wherein said first communication node includes a timer for restricting a holding period of time of the disconnection of said one line in said concentrating interval to a period within a predetermined time.

21. The system of claim 20, wherein in response to a call signal from a line in said first line interval, when it is discriminated by referring to said management table that said one line in said concentrating interval corresponding to said call signal is in a disconnection holding, said first communication node resets said timer and transmits an emergency call re-alerting signal to said second communication node, and in response to said emergency call re-alerting signal, said second communication node transmits a call signal similar to said call signal to the corresponding subscriber terminal.

22. The system of claim 20, wherein in response to an origination signal from said one subscriber terminal, said second communication node transmits an emergency call re-connect signal showing a re-connection of the emergency call to said first communication node, and in response to said emergency call re-connect signal, when it is discriminated by referring to said management table that said one line in said concentrating interval corresponding to said origination signal is in a disconnection holding, said first communication node resets said timer and transmits an origination signal similar to said origination signal to one corresponding line in said first line interval.

23. The system of claim 21 or 22, further including a control channel multiplexed on said one line in said concentrating interval, and wherein said emergency call disconnect signal and said emergency call re-alerting signal are transmitted through said control channel.

FIG. 1

NON-CONCENTRATING INTERVAL (TOTAL k LINES)

CONCENTRATING INTERVAL (TOTAL m CHANNELS)

NON-CONCENTRATING INTERVAL (TOTAL n LINES)

(WHERE n=k>m)

NODE 1

ANALOG SUBSCRIBER LINES

100    150

(CIRCUIT TRANSFER ADAPTER)

NODE 2

DIGITAL SUBSCRIBER LINES

250

(CONCEN-TRATOR)

NODE 3

ANALOG SUBSCRIBER LINES

350

SUBSCRIBER TERMINAL

400

200

300

1000

PSTN

550

FIRE-POLICE    500

ANALOG SUBSCRIBER LINE

160

10

SUBSCRIBER TERMINAL

400a

EP 0 869 689 A2

# FIG. 2

ANALOG SUBSCRIBER LINES

150

ANALOG CIRCUIT I/F CONTROL UNIT

212

SWITCH

211

214 BUS

DIGITAL CIRCUIT I/F CONTROL UNIT

217

CONTROL CIRCUIT PORT

213

250

DIGITAL SUBSCRIBER LINES

220 — MEMORY

221 — GENERAL CALL PROCESSING PROGRAM

222 — EMERGENCY CALL PROCESSING PROGRAM

223 — CONNECTING PROCESS | RE-ALERTING PROCESS

230

224 — OTHER APPARATUS CONTROL PROGRAM

225 — CHANNEL MANAGEMENT TABLE

CPU

216

CIRCUIT CONTROL UNIT

215

200

EP 0 869 689 A2

FIG. 3

DIGITAL
SUBSCRIBER
LINES

250

317

DIGITAL CIRCUIT
I/F
CONTROL UNIT

CONTROL
CIRCUIT
PORT

322

SWITCH
FOR
CONCENTRATION

321

ANALOG
CIRCUIT
I/F
CONTROL
UNIT

323

ANALOG
SUBSCRIBER
LINES

350

324

BUS

MEMORY

328

CPU

326

327

300

CIRCUIT CONTROL UNIT

EP 0 869 689 A2

FIG. 4

NODE 2
EMERGENCY CALL RE-ALERTING PROCESS — 230

COMMUNICATION IN PROGRESS — 231

EMERGENCY
CALL DISCONNECT SIGNAL — 232
IS RECEIVED ?

NO

YES

DISCONNECT ANALOG CIRCUIT (OPEN THE LOOP) — 233

ACTIVATE DIGITAL CIRCUIT HOLDING TIMER — 234

235

CALL
SIGNAL IS RECEIVED ?
(ON ANALOG CIRCUIT
SIDE)

YES

NO

TRANSMIT EMERGENCY CALL
RE-ALERTING SIGNAL — 240
(ON DIGITAL CIRCUIT SIDE)

RECEIVE EMERGENCY CALL
RE-CONNECT SIGNAL — 241
(ON DIGITAL CIRCUIT SIDE)

STOP DIGITAL CIRCUIT
HOLDING TIMER — 239

236

TRANSMIT CONNECT SIGNAL
(CLOSE THE LOOP) — 242
(ON ANALOG CIRCUIT SIDE)

EMERGENCY
CALL RE-CONNECT SIGNAL
IS RECEIVED ? (ON DIGITAL
CIRCUIT SIDE)

YES

NO

STOP DIGITAL CIRCUIT
HOLDING TIMER — 243

237

TRANSMIT ORIGINATION SIGNAL
(CLOSE THE LOOP) — 244
(ON ANALOG CIRCUIT SIDE)

NO

DIGITAL
CIRCUIT HOLDING TIMER
TIMES OUT ?

YES

DIGITAL CIRCUIT DISCONNECTING AND RELEASING PROCESS — 238

END — 249

# FIG. 5

# FIG. 6

EP 0 869 689 A2

# FIG. 7

FIRE-POLICE 500 · NODE 1 100 · NODE 2 200 · NODE 3 300 · SUBSCRIBER TERMINAL 400

TIME

COMMUNICATION IN PROGRESS 990

803 EMERGENCY CALL DISCONNECT SIGNAL

903 DISCONNECT SIGNAL (OPEN THE LOOP)

ON-HOOK

611 BUSY TONE

703 DISCONNECT SIGNAL (OPEN THE LOOP)

830 (SPEECH PATH HOLDING)

850 DIGITAL CIRCUIT HOLDING TIMER

(SPEECH PATH HOLDING)

603 DISCONNECT SIGNAL

TIME-OUT

DISCONNECT MESSAGE 821

RELEASE MESSAGE 822

RELEASE COMPLETE MESSAGE 823

EP 0 869 689 A2

# FIG. 8

803 —

ADDITIONAL INFORMATION MESSAGE
(EMERGENCY CALL
DISCONNECT SIGNAL)

851 — PROTOCOL IDENTIFIER

852 — CALL REFERENCE

853 — MESSAGE TYPE

854 — EMERGENCY CALL DISCONNECT
SIGNAL INFORMATION ELEMENT

861 — INFORMATION ELEMENT
IDENTIFIER

# FIG. 9

801 — ADDITIONAL INFORMATION MESSAGE
(EMERGENCY CALL
RE-ALERTING SIGNAL)

851 — PROTOCOL IDENTIFIER

852 — CALL REFERENCE

853 — MESSAGE TYPE

855 — RE-ALERTING SIGNAL
INFORMATION ELEMENT

862 — INFORMATION ELEMENT
IDENTIFIER

863 — LENGTH OF CONTENTS

864 — RE-ALERTING SIGNAL TYPE

# FIG. 10

802 — ADDITIONAL INFORMATION MESSAGE
(EMERGENCY CALL
RE-CONNECT SIGNAL)

851 — PROTOCOL IDENTIFIER

852 — CALL REFERENCE

853 — MESSAGE TYPE

856 — EMERGENCY CALL RE-CONNECT
SIGNAL INFORMATION ELEMENT

865 — INFORMATION ELEMENT
IDENTIFIER

866 — LENGTH OF CONTENTS

867 — RE-CONNECT SIGNAL TYPE

FIG. 11

DIGITAL SUBSCRIBER LINES
(CONCENTRATING INTERVAL)

10

WIRELESS DIGITAL
SUBSCRIBER LINES
253

1000

DIGITAL/ANALOG
CIRCUIT TRANSFER
ADAPTER

310

ANALOG
SUBSCRIBER
LINE

320

401

DIGITAL
SUBSCRIBER
LINES

BASE
STATION

WIRELESS
SUBSCRIBER
UNIT

FIXED
TERMINAL

351

101

SUBSCRIBER
LINES

251

LOCAL
SWITCH OR
(SUBSCRIBER
SWITCH)

151

201

DIGITAL
SUBSCRIBER
LINES

PSTN

252

550

ANALOG
SUBSCRIBER
LINE

CONCEN-
TRATOR

401

500

FIRE-POLICE

FIXED
TERMINAL

352

330

161

ANALOG
SUBSCRIBER
LINE

FIXED
TERMINAL

401

EP 0 869 689 A2

# FIG. 12

225
CHANNEL MANAGEMENT TABLE

| ANALOG SUBSCRIBER LINE NO. | SUBSCRIBER ID NO. | DIGITAL CIRCUIT CHANNEL NO. | DIGITAL CIRCUIT CHANNEL STATE |
|---|---|---|---|
| 1 | 881-1221 | 20 | COMMUNICATION IN PROGRESS |
| 2 | 638-9537 | 13 | EMERGENCY CALL HOLDING |
| 3 | 625-4598 | – | IDLE |
| 4 | 436-5562 | 8 | COMMUNICATION IN PROGRESS |
| 5 | 749-3632 | 15 | COMMUNICATION IN PROGRESS |
| ° | ° | ° | ° |
| ° | ° | ° | ° |
| ° | ° | ° | ° |

1211 1212 1213 1214 1217 1215 1218 1216

EP 0 869 689 A2

# FIG. 13

EMERGENCY CALL DISCONNECT SIGNAL IS RECEIVED ? — 232

NO

YES

UPON RECEPTION OF EMERGENCY CALL DISCONNECT SIGNAL CHANNEL MANAGEMENT TABLE PROCESS

RECOGNIZE THE NUMBER OF THE DIGITAL CIRCUIT CHANNEL WHICH RECEIVED EMERGENCY CALL DISCONNECT SIGNAL — 261

REWRITE CORRESPONDING DIGITAL CIRCUIT CHANNEL STATE FROM "COMMUNICATION IN PROGRESS" TO "EMERGENCY CALL HOLDING" WITH REFERENCE TO RECOGNIZED "DIGITAL CIRCUIT CHANNEL NO. IN TABLE" ON CHANNEL MANAGEMENT TABLE — 262

RECOGNIZE CORRESPONDING ANALOG SUBSCRIBER LINE NO. WITH REFERENCE TO RECOGNIZED "DIGITAL CIRCUIT CHANNEL NO. IN TABLE" ON CHANNEL MANAGEMENT TABLE — 263

DISCONNECT ANALOG CIRCUIT (OPEN LOOP) — 233

ACTIVATE DIGITAL CIRCUIT HOLDING TIMER — 234

# FIG. 14

235 — CALL SIGNAL IS RECEIVED ? (ON ANALOG CIRCUIT SIDE)

NO

YES

264 — RECOGNIZE LINE NO. OF ANALOG SUBSCRIBER LINE WHICH RECEIVED CALL SIGNAL

265 — CHANNEL STATE OF CORRESPONDING DIGITAL CIRCUIT CHANNEL IS "EMERGENCY CALL HOLDING" WITH REFERENCE TO THE ANALOG SUBSCRIBER LINE NO. ON CHANNEL MANAGEMENT TABLE ?

NO

NORMAL TERMINATING PROCESS — 267

YES

266 — RECOGNIZE CHANNEL NO. OF CORRESPONDING DIGITAL CIRCUIT CHANNEL WITH REFERENCE TO THE ANALOG SUBSCRIBER LINE NO. ON CHANNEL MANAGEMENT TABLE

240 — TRANSMIT CALL RE-ALERTING SIGNAL (ON DIGITAL CIRCUIT SIDE)

UPON RECEPTION OF CALL SIGNAL CHANNEL MANAGEMENT TABLE PROCESS

EP 0 869 689 A2

# FIG. 15

RECEIVE EMERGENCY CALL RE-CONNECT SIGNAL
(ON DIGITAL CIRCUIT SIDE) ~241

STOP DIGITAL CIRCUIT HOLDING TIMER ~239

RECOGNIZE THE NUMBER OF THE DIGITAL
CIRCUIT CHANNEL WHICH RECEIVED EMERGENCY
CALL RE-CONNECT SIGNAL ~267

RECOGNIZE LINE NO. OF CORRESPONDING
ANALOG SUBSCRIBER LINE WITH REFERENCE
TO THE DIGITAL CIRCUIT CHANNEL NO.
ON CHANNEL MANAGEMENT TABLE ~268

UPON RECEPTION OF
EMERGENCY CALL
RE-CONNECT SIGNAL
CHANNEL
MANAGEMENT
TABLE PROCESS

TRANSMIT CONNECT SIGNAL(CLOSE LOOP)
(ON ANALOG CIRCUIT SIDE) ~242

EP 0 869 689 A2

# FIG. 16

EMERGENCY CALL DISCONNECT
SIGNAL INFORMATION ELEMENT ⌐854

BIT
8  7  6  5  4  3  2  1

OCTET
1

| 0 | 0 | 0 | 0 | 0 | 0 | 1 | 0 |

~861

(EMERGENCY CALL DISCONNECT SIGNAL
INFORMATION ELEMENT IDENTIFIER)

# FIG. 17

RE-ALERTING SIGNAL ⌐855
INFORMATION ELEMENT

BIT
8  7  6  5  4  3  2  1

OCTET

| 1 | 0 | 0 | 0 | 0 | 0 | 0 | 1 | 0 | 862 |
| 2 | RE-ALERTING SIGNAL LENGTH OF CONTENTS | | | | | | | | 863 |
| 3 | RE-ALERTING SIGNAL TYPE | | | | | | | | 864 |

RE-ALERTING SIGNAL TYPE (OCTET 3)
DISCRIMINATION AND TYPE OF DIFFERENT RE-ALERTING SIGNAL IS SHOWN
DISCRIMINATION ABOUT RE-ALERTING UPON EMERGENCY CALL IS ENABLED

BIT
8  7  6  5  4  3  2  1

0  0  0  0  0  0  0  0  RE-ALERTING UPON GENERAL CALL HOLDING

0  0  0  0  0  0  0  1  RE-ALERTING UPON EMERGENCY CALL HOLDING

OTHERS                              OPTION

OPTION REGION IS NOT
PARTICULARLY USED

# FIG. 18

RE-CONNECT SIGNAL
INFORMATION ELEMENT ⌒856

| BIT | | | | | | | | |
|---|---|---|---|---|---|---|---|---|
| OCTET | 8 | 7 | 6 | 5 | 4 | 3 | 2 | 1 |

| OCTET 1 | 0 | 0 | 0 | 0 | 0 | 0 | 1 | 0 | ⌒865 |
|---|---|---|---|---|---|---|---|---|---|
| 2 | RE-CONNECT SIGNAL LENGTH OF CONTENTS | | | | | | | | ⌒866 |
| 3 | RE-CONNECT SIGNAL TYPE | | | | | | | | ⌒867 |

RE-CONNECT SIGNAL TYPE (OCTET 3)

| BIT | | | | | | | | |
|---|---|---|---|---|---|---|---|
| 8 | 7 | 6 | 5 | 4 | 3 | 2 | 1 |
| × | × | × | × | × | × | × | 1/0 |

REVERSE/NORMAL

OTHERS

OPTION REGION IS NOT
PARTICULARLY USED

OPTION
× : DON'T CARE